# EUROPÄISCHE PATENTSCHRIFT

(11) **EP 1 853 816 B1**
(45) Veröffentlichungstag und Bekanntmachung des Hinweises auf die Patenterteilung: **21.06.2017**
(21) Anmeldenummer: 06706979.9
(22) Anmeldetag: 16.02.2006
(51) Int. Cl.: F02P 17/12, F02D 41/14, H04B 3/54

(54) **VORRICHTUNG ZUR ZÜNDSTEUERUNG**
DEVICE FOR IGNITION CONTROL
DISPOSITIF DE COMMANDE D'ALLUMAGE

(30) Priorität: 04.03.2005 DE 102005009981
(43) Veröffentlichungstag der Anmeldung: 14.11.2007
(73) Patentinhaber: Bayerische Motoren Werke Aktiengesellschaft, 80809 München (DE)
(72) Erfinder: KAGLEDER, Erich, 83451 Piding (DE)
(74) Vertreter: Bullwein, Fritz
(86) Internationale Anmeldenummer: PCT/EP2006/001377
(87) Internationale Veröffentlichungsnummer: WO 2006/094607

(56) Entgegenhaltungen:
- EP-A- 0 294 256
- WO-A-01/25625
- DE-A1- 19 813 955
- US-A1- 2005 028 786
- US-B1- 6 216 530

## Beschreibung

Die vorliegende Erfindung betrifft eine Vorrichtung zur Zündsteuerung mit den Merkmalen, die im Oberbegriff des Patentanspruchs 1 angegeben sind. Eine derartige Vorrichtung ist aus der DE 101 38 976 A bekannt. Siehe auch US 6 216 530 B.

Die Zündkerze dient dabei als Sensor für den Ionenstrom, der infolge der Verbrennung eines Luft-Kraftstoffgemischs innerhalb des Zylinders der Brennkraftmaschine hervorgerufen wird. Die Stärke des Ionenstroms ändert sich wesentlich in Abhängigkeit vom Verbrennungszustand innerhalb des Brennraums. Unter Ausnutzung dieses Effekts kann der Verbrennungszustand innerhalb des jeweiligen Zylinders identifiziert und es kann auch das Auftreten einer Fehlzündung oder klopfenden Verbrennung in der Brennkraftmaschine festgestellt werden.

Handelt es sich bei der Primär- und der Sekundärwicklung um Bestandteile eines üblichen Einzelspulenzündsystems, d.h. einem aus der jeweiligen Zündkerze und einer zugehörigen Zündspule bestehenden System, das von der Zündsteuereinheit geschaltet wird, ergeben sich mindestens vier elektrische Anschlusskontakte zwischen Zündsteuereinheit und dem Einzelspulenzündsystem, nämlich für die beiden Potentiale des Bordnetzes, die Steuerung der Primärwicklung und die Rückführung des Ionenstromsignals.

Im Gegensatz dazu sind bei einer konventionellen Zündsteuerung mit Einzelspulenzündsystem, d.h. einer Zündsteuerung ohne Berücksichtigung des Ionenstromsignals nur drei Anschlusskontakte erforderlich. Für eine Brennkraftmaschine mit mehreren Zylindern bedeutet die Berücksichtigung des Ionenstromsignals einen grundsätzlich anderen Verkabelungsaufbau. Hinzu kommen die mit jedem Anschlusskontakt verbundenen Kontaktprobleme, die proportional mit der Zahl der Anschlusskontakte ansteigen.

Der Erfindung liegt die Aufgabe zu Grunde, eine Vorrichtung der eingangs genannten Art zu schaffen, bei der die Anzahl der Anschlusskontakte und der damit verbundenen Kontaktprobleme klein gehalten ist.

Diese Aufgabe wird durch die Vorrichtung gelöst, deren Merkmale im Patentanspruch 1 angegeben sind.

Wesentlich für die Erfindung ist die Ausgestaltung der einzigen zwischen der Zündsteuereinheit und dem Einzelspulenzündsystem bestehenden elektrischen Leitung als Stromschnittstelle, welche in zwei Richtungen betrieben wird. Eine Stromschnittstelle ist grundsätzlich unempfindlich gegenüber Masseversätzen zwischen Motorblock und Zündsteuereinheit. Ein Masseversatz ist der Unterschied des Bezugspotentials (0V) zwischen zwei räumlich voneinander getrennten elektrischen Schaltungen, hervorgerufen durch elektromagnetische Einstrahlung und/oder Stromfluss in Verbindung mit der Impedanz der Masseverbindung. Eine Stromschnittstelle besitzt normalerweise eine Stromquelle (Sender) und eine Stromsenke (Empfänger). Durch die Einrichtung von zwei Betriebsarten über die Spannungspegel kann zeitlich nacheinander Information in zwei Richtungen übertragen werden. Dadurch wird es möglich, mit lediglich drei Anschlusskontakten zwischen Zündsteuereinheit und dem Einzelspulenzündsystem auszukommen.

Unterschieden wird die Betriebsart durch einen Spannungspegel, der deutlich über oder unter 4V liegt. Fungiert die Zündsteuereinheit als Sender, d.h. steuert sie für die Auslösung des Zündfunkens die Primärwicklung der Zündspule an, zieht sie den Pegel der Leitung aktiv auf Masse (OV) oder lässt die Leitung offen (passiv, 4V bzw. 0mA). Eine der Zündspule vorgelagerte Schaltungslogik unterscheidet anhand des sich auf der Leitung einstellenden Stroms auf aktive oder passive Leitung. So lässt sich ein Digitalsignal auf die Schaltungslogik übertragen, auf Grund dessen die Zündung ausgelöst wird.

Umgekehrt wird zur Übertragung des Ionenstroms zur Zündsteuereinheit der Spannungspegel der Leitung auf 8V eingestellt. Dabei prägt dann die Schaltungslogik in der Zündspule den Ionenstrom auf der Leitung ein. Die Motorsteuerung kann diesen Strom über einen Messwiderstand bestimmen und weiterverarbeiten. Diese Unterscheidung der beiden Leitungssignale zwischen analog und digital erleichtert es zusätzlich, die Wirkrichtung der Stromschnittstelle zu erkennen.

Wird zusätzlich der Ionenstrom in der Schaltungslogik erfasst, ergibt sich eine deutliche Verbesserung der Störbeständigkeit, da der im uA Bereich liegende Ionenstrom bereits nahe an der Zündkerze behandelt wird.

Hierzu kann es vorteilhaft sein, in der Schaltungslogik zusätzlich eine Verstärkerschaltung für das von der Sekundärwicklung ausgehende Ionenstromsignal vorzusehen. Damit können auch geringste Ionenströme erfasst werden.

Eine weitere Verbesserung ergibt sich, wenn die Verstärkerschaltung in ihrem Verstärkungsfaktor entsprechend der Stärke des Ionenstroms gesteuert ist. Diese Steuerung kann vorteilhafter Weise von der Zündsteuereinheit aus vorgenommen werden. Die Verstärkung ist um so größer, je schwächer das Ionenstromsignal zunächst ist.

Der Verstärkungsfaktor kann dazu als digitales Signal von der Zündsteuereinheit vorgegeben werden. Dieses Signal ist damit wie das Zündsignal digital und unterscheidet sich davon im Wesentlichen hinsichtlich des Zeitpunkts, zu dem es ausgegeben wird.

Wird es innerhalb eines Arbeitszyklus für einen Zylinder vorab von der Zündsteuereinheit ausgegeben, ist eine Kollisionsgefahr mit dem Zündsteuersignal gebannt.

Der Verstärkungsfaktor selbst kann durch die Stärke des Ionenstromsignals im vorangehenden Arbeitszyklus des Zylinders bestimmt sein. Da bei der Zündsteuereinheit das bereits verstärkte Ionenstromsignal ankommt und die Zündsteuereinheit den zu Grunde liegenden Verstärkungsfaktor kennt, kann sie den Faktor jeweils anpassen, wenn sich das verstärkte Ionenstromsignal verändert. Auf diese Weise kann das in der Zündsteuereinheit eingehende Ionenstromsignal in einem optimalen Aussteuerbereich in Bezug auf Signal/Störabstand gehalten werden, ohne an die Aussteuergrenzen zu stoßen.

Darüber hinaus kann auch die Höhe der Messspannung wie oben für den Verstärkungsfaktor beschrieben als digitales Signal von der Zündsteuereinheit vorgegeben werden. Dadurch kann die Messspannung bei ausreichend hohem Ionenstromsignal reduziert werden, um die Verlustleistung in der Messspannungserzeugung gering zu halten. Außerdem wird mit kleinerer Messspannung auch dem Zündfunken weniger Energie entzogen. Da sich die Messspannung zu der beim Einschalten der Primärwicklung entstehenden sekundären Einschalthochspannung addiert, wird die resultierende Spannung über der Zündkerze unnötig erhöht, wodurch die Gefahr von unerwünschten Frühzündungen reduziert wird.

Die Erfindung wird nachstehend anhand eines in der Zeichnung dargestellten Ausführungsbeispiels näher erläutert. Es zeigt:
- Fig. 1: ein Blockschaltbild einer Zündsteuervorrichtung für eine Brennkraftmaschine gemäß der Erfindung und
- Fig. 2: mehrere Zeitablaufdiagramme zur Erläuterung der Arbeitsweise der Zündsteuervorrichtung von Fig. 1.

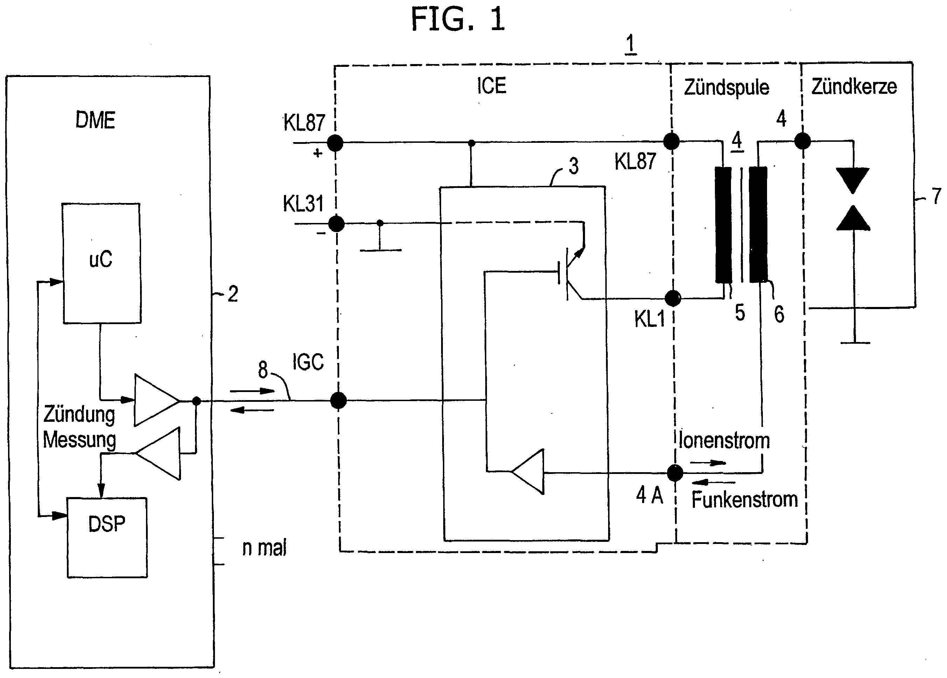

Die in Fig. 1 gezeigte Zündsteuervorrichtung zeigt ein Einzelspulenzündsystem 1 für einen Zylinder einer Brennkraftmaschine (nicht dargestellt), das durch eine Zündsteuereinheit 2 gesteuert wird. Die Zündsteuereinheit 2 ist in einer mit DME bezeichneten digitalen Motorelektronikeinheit enthalten, die auch die Kraftstoffeinspritzung in die verschiedenen (n) Zylinder und neben dem einen Zylinder die Zündung der anderen Zylinder steuert.

Das Einzelspulenzündsystem 1 besteht im wesentlichen aus einer Schaltungslogik 3, einer Zündspule 4 mit Primärwicklung 5 und Sekundärwicklung 6 sowie einer Zündkerze 7.

Die DME ist mit Einzelspulenzündsystem 1 über drei Leitungen verbunden. Dabei handelt es sich um zwei Leitungen (KL87 und KL31) zu den beiden Polen (+/-) des Bordnetzes sowie eine Steuerleitung 8 (als IGC bezeichnet).

Die Leitung 8 dient als Stromschnittstelle zwischen dem Einzelspulenzündsystem 1 und der Zündsteuereinheit 2, die in beiden Richtungen arbeitet. Die Wirkrichtung der Leitung 8 ist durch unterschiedliche an der Leitung anliegende Spannungspegel von 0 und 8V einstellbar.

Beim Spannungspegel 8V überträgt die Leitung 8 ein von der Sekundärwicklung 6 ausgehendes Ionenstromsignal als ein analoges Signal. Dieses Signal ermöglicht eine Aussage über Art und Umfang der im Zylinder stattfindenden Verbrennung. Bedingt durch den drehzahl- und lastabhängigen großen Umfang des Ionenstromsignals wird dieses in der Schaltungslogik 3 verstärkt und anschließend auf der Leitung 8 übertragen. Der dafür vorgesehene Verstärkungsfaktor wird als digitales Signal ebenfalls ausgehend von der Zündsteuereinheit 2 über die Leitung 8 an die Schaltungslogik übertragen. Hierzu wird ein Spannungspegel von 0V eingestellt. Bei diesem Spannungspegel überträgt die Zündsteuereinheit 2 auch ein digitales Steuersignal an die Schaltungslogik 3 und löst damit den Zündvorgang aus.

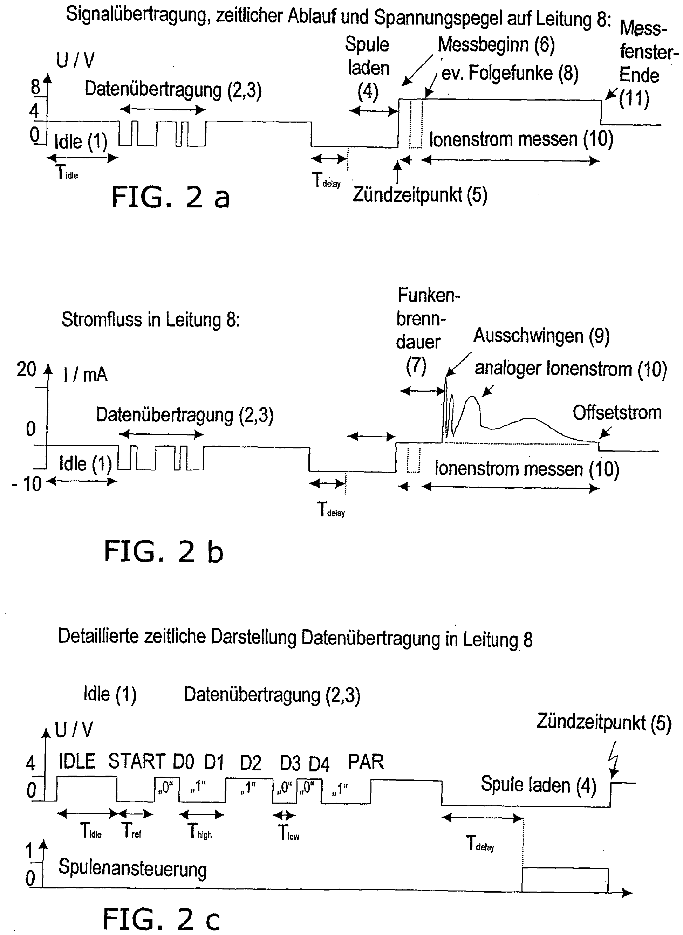

Der zeitliche Ablauf ist in Fig. 2 an Hand eines mit a) bezeichneten Spannungsverlaufsdiagramms, einem mit b) bezeichneten Stromverlaufsdiagramm sowie einem Datenübertragungsdiagramm c) erläutert.

Ausgehend von einem Ruhezustand, bei dem auf der Signalleitung 8 für eine ausreichend große Idlezeit T_{idle} kein Signal (4V bzw. 0mA) vorliegt, wird von der Zündsteuereinheit 2 über die Signalleitung für eine definierte Zeit T_{ref} von 150*µ*s ein mit START bezeichnetes Startbit für den Arbeitstakt aktiviert. Diese Zeit dient der Schaltungslogik 3 als Zeitreferenz. Nach dem Startbit folgen die eigentlichen Informationsbits D0 - D3. Dabei ist die Unterscheidung nach T_{low} = "0" oder T_{high} = "1" die zeitliche Dauer im Bezug auf die Startbitdauer T_{ref}. Kürzer als T_{ref}, hier 0,5 mal T_{ref} bedeutet Bit = 0, länger als T_{ref}, hier 1,5 mal T_{ref} bedeutet Bit = 1.

D0, hier mit dem Wert = 1 entspricht einem von zwei einstellbaren Werten für die einzustellende Messspannung.
D1 - D3 ergeben einen von acht möglichen Binärwerten für die einzustellende Verstärkung des von der Sekundärwicklung 6 ausgehenden Ionenstromsignals.

Mit D4 (Wert = 0 oder 1) wird, hier beim Wert = 1 ein Offsetstrom für das Ionenstromsignal eingestellt und damit eine Diagnose der Zündvorrichtung durchgeführt. Unterscheidet sich das Ionenstromsignal bei zwei aufeinander folgenden Arbeitstakten, wenn bei einem der beiden Arbeitstakte ein Offsetstrom, hier als Offsetstrom dargestellt, eingestellt ist, ist der Ablauf in Ordnung. Zeigt sich kein Unterschied, deutet das auf einen Fehler in der Schaltlogik 3 hin. Dem liegt die Überlegung zu Grunde, dass bei zwei aufeinander folgenden Arbeitstakten derselbe Betriebszustand der Brennkraftmaschine vorliegt.

Ein mit PAR bezeichnetes Paritätsbit dient zur Absicherung der Datenübertragung.

Im Anschluss daran erfolgt abhängig vom gewünschten Zündzeitpunkt die Aufladung der Primärwicklung 5. Hierzu wird der Signalzustand auf der Leitung 8 bleibend geändert. Nach Ablauf einer Einschaltverzögerung T_{delay}, welche gleich dem Zweifachen der Startbitdauer T_{ref} ist, wird die Primärwicklung 5 geladen. Hierdurch wird ein unbeabsichtigtes Laden der Primärwicklung 5 während der Datenübertragung unterdrückt. Zum Zündzeitpunkt (durch ein Blitzsignal markiert) wird die Primärwicklung 5 abgeschaltet, es entsteht die sekundäre Hochspannung und es erfolgt die Zündung.

Nach der Zündung wird die Leitung 8 auf 8V gelegt und damit auf Ionenstrommessung umgeschaltet.

Nach dem Abklingen des Zündfunkenstroms schwingt die Restenergie der Zündspule 4 aus. Dies kann bereits im Ionenstromsignal gemessen und für die Funkenüberwachung ausgewertet werden.
Nach dem Ausschwingen der Restenergie liegt über der Zündkerze 7 die eingestellte Messspannung an und es fließt ein Ionenstrom. Der Ionenstrom wird entsprechend der eingestellten Verstärkung verstärkt, ggf. mit dem eingestellten Offsetstrom angehoben und als analoger Strom über die Leitung 8 auf die Zündsteuereinheit 2 zurückgeführt. Diese erkennt an Hand des Ionenstromsignals ggf. Fehler im Zündvorgang und kann ggf. Sicherheitsmaßnahmen ergreifen.

## Patentansprüche

1. Vorrichtung zur Zündsteuerung in einem Zylinder eines Verbrennungsmotors, mit einer Zündspule, deren Primärwicklung (5) geschaltet ist und die eine mit einer Zündkerze (7) verbundene Sekundärwicklung (6) aufweist, und mit einer Zündsteuereinheit (2), die über eine erste Leitung die Primärwicklung (5) schaltet und die über eine zweite Leitung mit der Sekundärwicklung (6) verbunden ist, wobei diese zweite Leitung ein von der Zündkerze (7) ausgehendes Ionenstromsignal der Zündsteuereinheit (2) zuführt,
**dadurch gekennzeichnet, dass**
die als die erste und die zweite Leitung eine einzige Leitung (8) dient, und dass die Wirkrichtung der Leitung durch unterschiedliche an der Leitung anliegende Spannungspegel einstellbar ist.

2. Vorrichtung nach Anspruch 1, **dadurch gekennzeichnet, dass** die Spannungspegel Werte von 0 und 8V besitzen.

3. Vorrichtung nach Anspruch 1 oder 2, dass mit der Zündspule eine von der Zündsteuereinheit (2) gesteuerte Schaltungslogik (3) in räumlicher Verbindung steht, dass die Zündsteuereinheit ein digitales Steuersignal an die Schaltungslogik überträgt, und dass das von der Sekundärwicklung (6) ausgehende Ionenstromsignal ein analoges Signal ist.

4. Vorrichtung nach Anspruch 3, **dadurch gekennzeichnet, dass** die Schaltungslogik zusätzlich eine Verstärkerschaltung für das von der Sekundärwicklung ausgehende Ionenstromsignal enthält.

5. Vorrichtung nach Anspruch 4, **dadurch gekennzeichnet, dass** die Verstärkerschaltung in ihrem Verstärkungsfaktor von der Zündsteuereinheit gesteuert ist.

6. Vorrichtung nach Anspruch 5 **dadurch gekennzeichnet, dass** der Verstärkungsfaktor als digitales Signal von der Zündsteuereinheit vorgebbar ist.

## Claims

1. A device for ignition control in a cylinder of an internal combustion engine, said device comprising an ignition coil, of which the primary winding (5) is connected and which has a secondary winding (6) connected to a spark plug (7), and comprising an ignition control unit (2), which connects the primary winding (5) by means of a first lead and which is connected to the secondary winding (6) by means of a second lead, wherein this second lead feeds an ion current signal emitted from the spark plug (7) to the ignition control unit (2), **characterised in that**
a single lead (8) serves as the first and the second lead, and **in that** the active direction of the lead can be adjusted by different levels of voltage applied to the lead.

2. A device according to claim 1, **characterised in that** the levels of voltage have values from 0 to 8V.

3. A device according to claim 1 or claim 2, **characterised in that** a circuit logic (3) controlled by the ignition control unit (2) is spatially connected to the ignition coil, **in that** the ignition control unit transfers a digital control signal to the circuit logic, and **in that** the ion current signal emitted from the secondary winding (6) is an analogue signal.

4. A device according to claim 3, **characterised in that** the circuit logic additionally contains an amplifier circuit for the ion current signal emitted from the secondary winding.

5. A device according to claim 4, **characterised in that** the amplification factor of the amplifier circuit is controlled by the ignition control unit.

6. A device according to claim 5, **characterised in that** the amplification factor can be predefined as a digital signal by the ignition control unit.

## Revendications

1. Procédé de commande d'allumage dans un cylindre d'un moteur à combustion interne comprenant une bobine d'allumage dont l'enroulement primaire (5) est branché et qui comporte un enroulement secondaire (6) relié à une bougie d'allumage (7), ainsi qu'une unité de commande d'allumage (2) qui branche l'enroulement primaire (5) par l'intermédiaire d'une première ligne et qui est reliée à l'enroulement secondaire (6) par l'intermédiaire d'une seconde ligne, cette seconde ligne transmettant à l'unité de commande d'allumage (2) un signal de courant ionique provenant de la bougie d'allumage (7),
**caractérisé en ce qu'**
une ligne unique (8) sert de première ligne et de seconde ligne, et la direction d'action de cette ligne peut être réglée par différents niveaux de tension appliqués sur cette ligne.

2. Dispositif conforme à la revendication 1,
**caractérisé en ce que**
les niveaux de tension ont des valeurs de 0 et 8 Volts.

3. Dispositif conforme à la revendication 1 ou 2,
**caractérisé en ce qu'**
une logique de commutation (3) commandée par l'unité de commande d'allumage (2) est en liaison spatiale avec la bobine d'allumage, l'unité de commande d'allumage transmet un signal de commande numérique à la logique de commutation, et le signal de courant ionique provenant de l'enroulement secondaire (6) est un signal analogique.

4. Dispositif conforme à la revendication 3,
**caractérisé en ce que**
la logique de commutation renferme en outre un circuit d'amplification du signal de courant ionique provenant de l'enroulement secondaire.

5. Dispositif conforme à la revendication 4,
**caractérisé en ce que**
le facteur d'amplification du circuit d'amplification est commandé par l'unité de commande d'allumage.

6. Dispositif conforme à la revendication 5,
**caractérisé en ce que**
le facteur d'amplification peut être prédéfini sous la forme d'un signal numérique par l'unité de commande d'allumage.
